# FASCICULE DE BREVET EUROPEEN

(11) **EP 1 109 082 B1**
(45) Date de publication et mention de la délivrance du brevet: **25.03.2009**
(21) Numéro de dépôt: 99124387.4
(22) Date de dépôt: 07.12.1999
(51) Int. Cl.: G04C 10/00, H02K 3/00

(54) **Génératrice notamment pour pièce d'horlogerie**
Generator insbesondere für Uhrwerk
Generator in particular for timepiece

(43) Date de publication de la demande: 20.06.2001
(73) Titulaire: ASULAB S.A., CH-2501 Bienne (CH)
(72) Inventeur: Born, Jean-Jacques, 1110 Morges (CH)
(74) Mandataire: Surmely, Gérard

(56) Documents cités:
- EP-A- 0 751 445
- EP-A- 0 905 587

## Description

La présente invention se rapporte à une génératrice du type horloger et à un mouvement horloger équipé d'une telle génératrice, en particulier pour montre-bracelet.

L'utilisation de batteries ou d'accumulateurs est pour toutes les applications, et en particulier pour une montre, un facteur limitant des caractéristiques de l'appareil. En effet, le changement ou la recharge de ces batteries ou accumulateurs affecte la disponibilité et la fiabilité de la montre.

Dans ce contexte, la montre mécanique traditionnelle possède un avantage certain dans la technique horlogère : une telle montre est disponible en permanence. La recharge en énergie - celle-ci étant purement mécanique - se fait simplement par remontage du mécanisme de la montre.

Ce type de montre utilise un dispositif de remontage manuel ou automatique couplé généralement à un dispositif de régulation nommé dans l'usage « échappement à ancre suisse ». Ce dispositif de régulation permet difficilement d'obtenir une grande précision. Ce système est en outre relativement coûteux.

L'autre grande famille concerne la montre à quartz classique. Une batterie alimente simultanément un moteur électrique et un dispositif de régulation de la marche de ce moteur. La rotation du moteur est pilotée par une fréquence nominale fournie par un quartz. Ceci permet d'avoir une bonne précision pour l'indication de l'heure. Toutefois, ce dispositif est relativement bruyant car l'avance de la roue des secondes est saccadée et la batterie doit être changée périodiquement.

De nouveaux types de montres ont été réalisés de façon à coupler les deux systèmes précités et exploiter leurs avantages respectifs. Dans ces réalisations, on a associé un stockage mécanique de l'énergie à une régulation par quartz, alimentée en énergie électrique par une génératrice entraînée par une partie mécanique couplée à un ressort de stockage de l'énergie.

Comme état de la technique correspondant peut être cité notamment l'article de MM Born, Dinger et Farine, « Salto - Un mouvement mécanique à remontage automatique ayant la précision d'un mouvement à quartz » paru dans la publication de la Société Suisse de Chronométrie « SSC journées d'étude 1997 », pages 55 à 63.

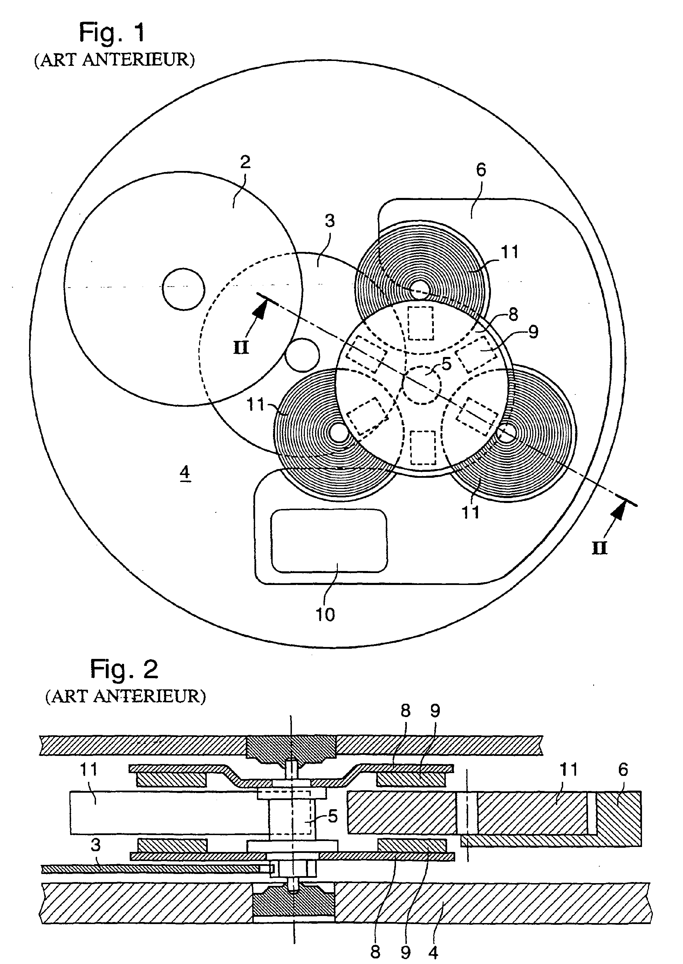

L'agencement de la génératrice selon cet art antérieur est illustré dans la figure 1 jointe, montrant une vue de dessus d'un mouvement horloger partiellement monté, et dans la figure 2 jointe, qui est une coupe transversale de la figure 1. Cette génératrice comprend un rotor ayant deux flasques 8 agencés de part et d'autre de trois bobines plates 11 formant le stator et décalées de 120° l'une par rapport à l'autre relativement à l'axe du rotor, dans un même plan orthogonal à celui-ci.

Six aimants 9 sont fixés radialement et à intervalles réguliers sur chaque flasque 8, en vis-à-vis des bobines 11. La polarité de deux aimants 9 consécutifs ou en vis-à-vis est opposée. Un circuit imprimé 6 est fixé à la platine 4 et sert de support pour les bobines 11.

L'alimentation du circuit électronique 10, à faible consommation d'énergie, est assurée par une génératrice électrique - constituée de l'ensemble arbre du rotor 5, flasques 8, aimants 9 et bobines 11 - entraînée via la liaison cinématique 3 par le dispositif à barillet 2. L'énergie mécanique stockée dans le barillet 2 entraîne donc le rotor. Le passage des aimants 9 à proximité des bobines 11 génère une tension induite substantiellement sinusoïdale aux bornes de ces bobines 11.

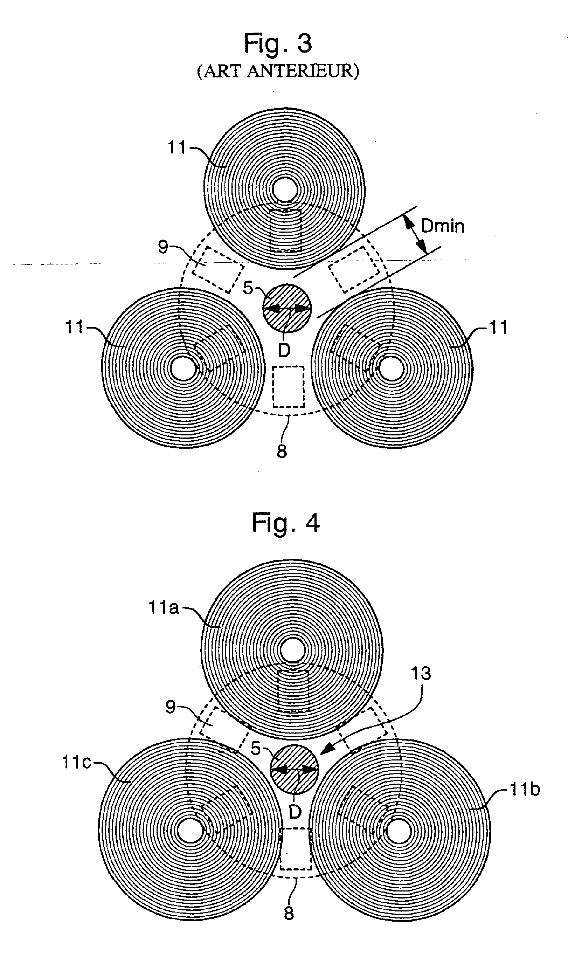

La figure 3 ci-jointe met schématiquement en évidence le fait que le montage du rotor monobloc - constitué des pièces 5, 8 et 9 - se fait actuellement par insertion latérale de l'arbre 5 entre deux bobines 11 fixes. Le rotor, monobloc, ne peut pas être inséré par la verticale puisque les trois bobines 11 sont fixes et les flasques 8 situés de part et d'autre de ces bobines doivent partiellement les recouvrir. Comme cela ressort en particulier des figures 2 et 3 du document cité, les bobines 11 présentent un écartement, référencé DMin à la figure 3 ci-jointe, au moins aussi large que l'arbre 5 du rotor, ayant un diamètre D en son milieu, pour permettre l'introduction de cet arbre latéralement jusqu'à son emplacement définitif au centre des trois bobines. Du fait de l'espacement alors ménagé entre les trois bobines 11 décalées angulairement de 120°, on obtient un médiocre recouvrement de ces bobines 11 par les aimants 9, ce qui entraîne une baisse du rendement de la microgénératrice, et un encombrement relativement important. En d'autres termes le nombre de spires des bobines 11 superposées aux flasques 8 portant en périphérie les aimants 9 est limité.

L'invention vise à remédier à ces inconvénients. Elle se rapporte à cet effet à une génératrice du type horloger comprenant d'une part un rotor comportant deux flasques portés par un arbre, cet arbre et ces flasques étant solidaires en rotation en ordre de marche, des aimants étant fixés à chaque flasque en nombre pair - deux aimants consécutifs ou en vis-à-vis étant de polarité opposée - et comprenant d'autre part un stator formé d'au moins trois bobines d'axes parallèles à celui du rotor et agencées sur un support, ces bobines étant agencées entre les deux flasques munis d'aimants et ménageant entre elles un espace central suffisant pour ledit arbre du rotor. Cette génératrice est caractérisée en ce que le support de bobine est formé d'au moins deux parties agencées pour être assemblées avec le rotor indépendamment l'une de l'autre et portant chacune au moins une bobine, et en ce qu'il est prévu des moyens de connexion électrique entre ces au moins deux parties, la distance séparant deux bobines adjacentes quelconques étant inférieure au diamètre D de l'arbre du rotor.

Selon un deuxième mode de réalisation de l'invention, la génératrice du type horloger est caractérisée en ce que le support de bobine présente au moins deux parties rigides ou rigidifiées portant chacune au moins une bobine et une partie déformable reliant matériellement ces deux parties rigides, cette partie déformable étant agencée pour être déformée élastiquement lors de l'assemblage du rotor avec le stator pour permettre le passage latéral de l'arbre de ce rotor entre deux bobines, la distance séparant deux bobines adjacentes quelconques étant inférieure au diamètre D de l'arbre du rotor.

Grâce aux caractéristiques de l'invention selon le premier ou deuxième mode de réalisation mentionné ci-dessus, il est possible d'utiliser de manière optimale l'espace de couplage entre les aimants du rotor et les bobines statoriques. Le diamètre de l'arbre du rotor n'est plus un paramètre limitant les dimensions des bobines statoriques. De ce fait, le rendement de la génératrice et/ou l'encombrement du stator sont améliorés.

L'invention sera décrite ci-après en référence au dessin annexé, donnés à titre d'exemple nullement limitatif, dans lequel :
- la figure 4 est une coupe, similaire à la figure 3, montrant l'agencement selon l'invention des bobines statoriques et de l'arbre du rotor une fois la génératrice montée;
- la figure 5 est une vue de dessus et la figure 6 est une vue en coupe d'un premier mode de réalisation comportant un ensemble formé d'un substrat en deux parties reliées par un pont;
- la figure 7 montre l'agencement de la connexion électrique entre les deux parties du substrat du premier mode de réalisation;
- la figure 8 est une vue de dessus et la figure 9 une vue en coupe d'un deuxième mode de réalisation d'une génératrice selon l'invention;
- la figure 10 est une vue de dessus et la figure 11 une vue en coupe d'un troisième mode de réalisation d'une génératrice selon l'invention; et
- la figure 12 est une vue en coupe d'une variante du troisième mode de réalisation.

La figure 4 montre l'agencement du rotor dont le flasque supérieure 8 et les aimants 9 qu'ils portent sont représentés en traits interrompu. L'arbre 5 du rotor présente en son milieu un diamètre D qui est supérieur à la distance séparant deux bobines adjacentes quelconques. Les bobines 11a, 11b et 11c définissent un espace central 13 où est agencé l'arbre 5 du rotor. Comme cela ressort de la figure 4, le recouvrement entre les bobines 11a, 11b et 11c et les flasques 8 du rotor est plus important que dans le cas de l'art antérieur représenté à la figure 3. On notera qu'en augmentant les dimensions des flasques 8 et des bobines, il est possible d'obtenir une configuration dans laquelle les bobines se touchent. Ainsi, la conception de la génératrice selon l'invention, telle qu'elle sera décrit plus précisément par la suite, permet d'augmenter le couplage aimants-bobines de la génératrice et/ou de minimiser l'encombrement du stator.

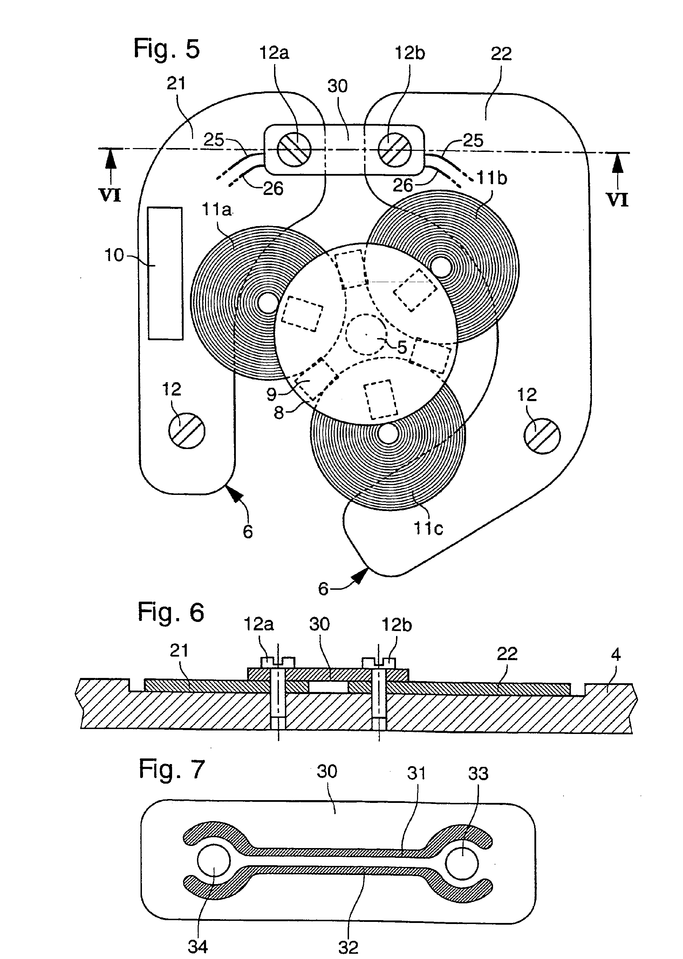

A l'aide des figures 5 à 7, on décrira ci-après un premier mode de réalisation de l'invention.

Le stator de la génératrice est formé d'un support 6 comprenant deux plaques distinctes 21 et 22 et trois bobines 11a, 11b et 11c. La plaque 22 porte les bobines 11b et 11c. Ainsi, la bobine 11a peut être introduite entre les flasques 8 du rotor de manière indépendante de l'introduction des bobines 11b et 11c. Lors de l'assemblage du rotor avec les bobines statoriques, ces dernières ne sont pas agencées l'une relativement aux autres dans des positions correspondantes à celles de la génératrice montée. De ce fait, il n'est plus nécessaire de prévoir un passage entre deux bobines pour l'introduction de l'arbre 5.

La plaque 21 est fixée au corps 4 d'un mouvement horloger à l'aide de deux vis 12 et 12a. De même, la plaque 22 est fixée à ce corps 4 au moyen de deux vis 12 et 12b. Les plaques 21 et 22 sont reliées par un pont 30 fixé au corps 4 à l'aide des vis 12a et 12b. Ce pont 30 sert à établir une connexion électrique entre deux pistes électriques 25 et 26 représentées partiellement à la figure 5. Le pont 30 présente donc deux pistes 31 et 32 sur sa face située en regard des plaques 21 et 22. Les extrémités des pistes 31 et 32 présentent des extrémités en arc de cercle agencé autour des trous 33 et 34 prévus respectivement pour le passage des vis 12a et 12b. On notera que les pistes 31 et 32 peuvent être agencées différemment. Il suffit que ces pistes permettent d'établir une connexion électrique entre les pistes 25 et 26 prévues d'une part sur la plaque 21 et d'autre part sur la plaque 22.

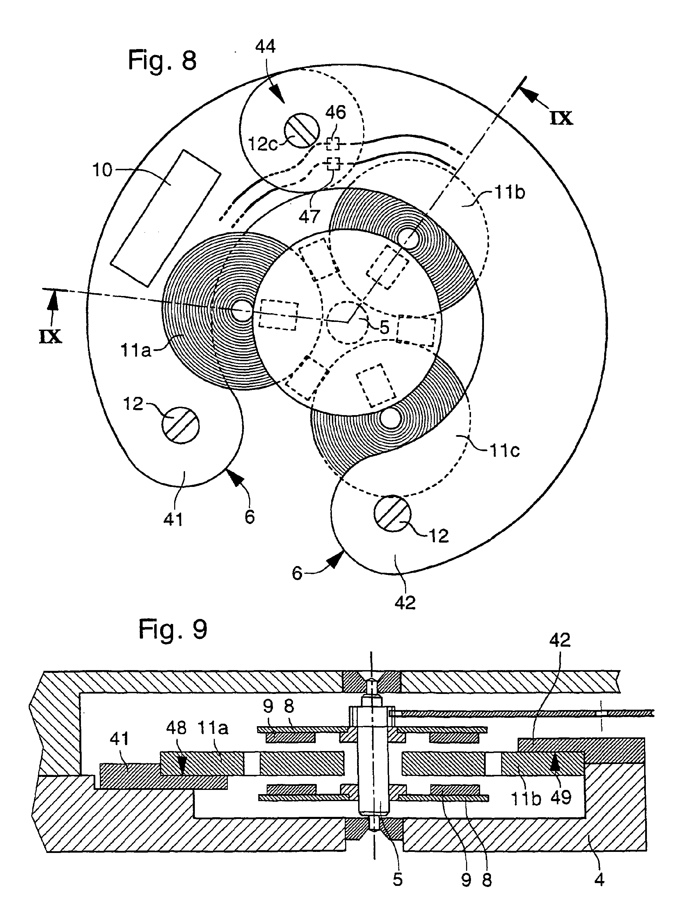

A l'aide des figures 8 et 9, on décrira ci-après un deuxième mode de réalisation de l'invention. Le stator 6 se distingue du mode précédent en ce qu'il est formé de deux plaques 41 et 42 partiellement superposées l'une à l'autre après montage de la génératrice. Dans la région de superposition 44 entre les plaques 41 et 42 sont agencés des plages de contact 46 et 47 sur chacune des plaques 41 et 42. Les deux plages 46, respectivement 47 sont situés l'une en face de l'autre de manière à assurer une connexion électrique entre les pistes électriques 25 et 26 prévues d'une part sur la face supérieure de la plaque 41 et d'autre part sur la face inférieure de la plaque 42.

La partie inférieure 41 porte la bobine 11a sur une surface supérieure 48 alors que la partie supérieure 42 porte les bobines 11b et 11c sur une surface inférieure 49. Les surfaces 48 et 49 sont situées à une certaine distance du plan de contact entre les plaques 41 et 42 dans la région de superposition 44. Ceci pour permettre aux trois bobines 11a, 11b et 11c d'être agencées dans un même plan général entre les flasques 8 du rotor.

A nouveau, lors du montage de la génératrice, et en particulier des bobines avec leur rotor, la bobine 11a est apportée séparément des bobines 11b et 11c. Ces bobines sont introduites latéralement entre les flasques 8 et sont ainsi amenées dans leur position relative définitive lors du montage du stator avec le rotor. Une fois les plaques 41 et 42 mises en place, celles-ci sont fixées au corps 4 du mouvement horloger au moyen de vis 12 et 12c, la vis 12c étant prévue dans la région de superposition 44.

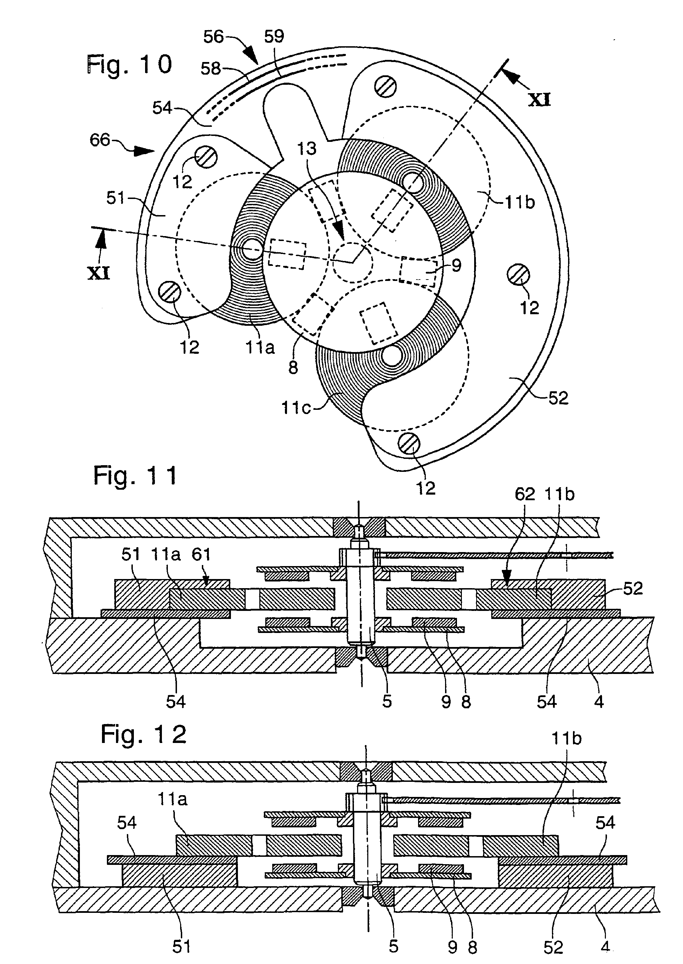

A l'aide des figures 10 et 11, on décrira ci-après un troisième mode de réalisation de l'invention. Ici, la génératrice est caractérisée par le fait que le stator est formé d'un support 66 comprenant deux substrats rigides 51 et 52 et un film souple 54 présentant une partie 56 déformable de manière élastique. Le film souple est superposé au substrat rigide 51 et 52 au moins dans la région des bobines 11a, 11b et 11c. Le substrat 51 porte la bobine 11a alors que le substrat 52 porte les bobines 11b et 11c. Dans une variante, le film souple 54 est collé contre la face inférieure des substrats 51 et 52. Dans une autre variante, il est seulement inséré entre ces substrats et le corps 4 du mouvement d'horlogerie, le film souple 54 étant ainsi maintenu fixement dans les deux régions de superposition au substrat 51 et 52 qui sont fixés au corps 4 au moyen de vis 12.

Les pistes électriques reliant les bobines sont disposés sur le film souple 54, deux pistes 58 et 59 traversant la région déformable 56.

Les substrats 51 et 52 présentent respectivement des parties 61 et 62 superposées aux bobines 11a, respectivement 11b et 11c. Ces bobines sont donc partiellement insérées dans des évidements définis entre ces parties 61, 62 et le film souple 54. Elles sont fixées aux substrats 61 et 62 par collage. Un film de colle peut également être prévu entre les bobines et le film souple 54 dans les régions de superposition.

A la figure 12 est représenté en coupe une variante de réalisation. Cette variante se distingue essentiellement en ce que le film souple 54 sur lequel sont imprimés les pistes conductrices est situé au dessus des substrats rigides 51 et 52. Dans les régions de superposition du film souple et des substrats rigides, le film souple est assemblé rigidement à ces substrats notamment par collage. Les bobines 11a à 11c sont agencées sur le film souple auquel elles adhèrent rigidement également par collage. Cette variante permet d'assembler plus aisément les divers éléments de la génératrice.

Dans le cadre du troisième mode de réalisation, le montage du stator et du rotor s'effectue en écartant les bobines 11a et 11c et en déformant élastiquement la partie 56 du film souple 54 pour permettre à l'arbre 5 du rotor d'être introduit dans la région centrale 13 définie par les trois bobines. Ce dernier mode de réalisation présente l'avantage d'avoir avant l'assemblage du rotor et du stator, un stator monobloc ou préalablement assemblé. La partie déformable 56 est formée de manière à pouvoir subir la légère déformation nécessaire au passage de l'arbre 5 sans que cela ne détériore les deux pistes conductrices 58 et 59 traversant cette région 56.

## Revendications

1. Génératrice du type horloger comprenant d'une part un rotor comportant deux flasques (8) portés par un arbre (5) présentant un diamètre D en son milieu, des aimants (9) étant fixés à chaque flasque en nombre pair - deux aimants consécutifs ou en vis-à-vis étant de polarité opposée - cette génératrice comprenant d'autre part un stator formé d'au moins trois bobines (11a, 11 b, 11 c) d'axes parallèles à celui dudit rotor et fixées sur un support (6), ces bobines étant agencées entre les deux flasques (8) munis d'aimants (9) et ménageant entre elles un espace central (13) suffisant pour l'arbre (5) du rotor, **caractérisée en ce que** ledit support de bobines est formé d'au moins deux parties (21,22) agencées pour être assemblées avec ledit rotor indépendamment l'une de l'autre et portant chacune au moins une bobine, et **en ce qu'**il est prévu des moyens de connexion électrique (30) entre ces au moins deux parties (21,22), la distance séparant deux bobines adjacentes quelconques étant inférieure audit diamètre D dudit arbre.

2. Génératrice selon la revendication 1, **caractérisée en ce que** lesdits moyens de connexion électrique sont formés par un pont reliant lesdites deux parties du support de bobines, ce pont présentant des pistes conductrices agencées sur sa face en regard de ces deux parties.

3. Génératrice selon la revendication 1, **caractérisée en ce que** ledit support de bobines est formé de deux parties partiellement superposées l'une à l'autre après montage de cette génératrice, ces deux parties présentant respectivement dans la région de superposition au moins des premières et deuxièmes plages ou pistes de contact reliées électriquement l'une à l'autre.

4. Génératrice selon la revendication 3, **caractérisée en ce que** la partie du support située au niveau inférieur relativement à l'autre partie du support porte sa au moins une bobine sur une surface supérieure alors que cette autre partie porte sa au moins une bobine sur une surface inférieure de manière que l'ensemble des bobines portées par ledit support sont situées dans un même plan général après montage de la génératrice.

5. Génératrice du type horloger comprenant d'une part un rotor comportant deux flasques (8) portés par un arbre (5) présentant un diamètre D en son milieu, des aimants (9) étant fixés à chaque flasque en nombre pair - deux aimants consécutifs ou en vis-à-vis étant de polarité opposée - cette génératrice comprenant d'autre part un stator formé d'au moins trois bobines (11a, 11b, 11c) d'axes parallèles à celui dudit rotor et fixées sur un support (66), ces bobines étant agencées entre les deux flasques (8) munis d'aimants (9) et ménageant entre elles un espace central (13) suffisant pour l'arbre (5) du rotor, **caractérisé en ce que** ledit support (66) de bobines présente au moins deux parties rigides (51,52) ou rigidifiées portant chacune au moins une bobine et une partie déformable (56) reliant matériellement ces deux parties rigides (51,52), cette partie déformable étant agencée pour être déformée élastiquement lors de l'assemblage dudit rotor et dudit stator pour permettre le passage latéral dudit arbre entre deux bobines, la distance séparant deux bobines adjacentes quelconques étant inférieure audit diamètre D dudit arbre.

6. Génératrice selon la revendication 5, **caractérisée en ce que** ledit support est formé par un film souple sur lequel sont déposées des pistes conductrices et par au moins deux substrats rigides au moins partiellement superposés audit film souple auquel ils sont solidement assemblés au moins après montage de la génératrice, ledit film définissant ladite partie déformable et lesdits au moins deux substrats rigides définissant respectivement lesdites au moins deux parties rigides ou rigidifiées.

7. Génératrice selon la revendication 6, **caractérisée en ce que** lesdits deux substrats rigides sont fixés au corps dans lequel est monté ledit rotor, ledit film souple étant placé entre ce corps et les deux substrats rigides.

8. Génératrice selon la revendication 7, **caractérisée en ce que** les deux substrats rigides présentent des parties (61, 62) superposées aux bobines et situées du côté opposé au film souple relativement à ces bobines.

9. Génératrice selon la revendication 6, **caractérisée en ce que** ledit film souple est collé sur lesdits substrats rigides, lesdites bobines étant fixées rigidement sur ce film souple.

10. Mouvement horloger **caractérisé en ce qu'**il est équipé d'une génératrice selon l'une des revendications 1 à 9.

## Claims

1. Generator of the clockwork type including on the one hand a rotor including two flanges (8) carried by a shaft (5) having a diameter D at its centre, magnets (91 and 92), in even numbers, each being fixed to each flange - two consecutive or facing magnets having opposite polarity - this generator including on the other hand a stator formed of at least three coils (11 a, 11 b, 11 c) with axes parallel to that of said rotor, and fixed onto a support (6), these coils being arranged between the two flanges (8) fitted with magnets and arranging between them a sufficient central space (13) for the rotor shaft (5), **characterised in that** said coil support is formed of at least two distinct parts (21, 22) arranged to be assembled with the rotor independently of each other and each carrying at least one coil, and **in that** means (30) for electrically connecting said at least two parts (21, 22) are provided, the distance separating any two adjacent coils being less than said diameter D of said rotor shaft.

2. Generator according to claim 1, **characterised in that** said electrical connecting means are formed of a bridge connecting said two parts of said coil support, said bridge being provided with conductive strips arranged on its face situated opposite said two parts.

3. Generator according to claim 1, **characterised in that** said coil support is formed of two parts which are partially superposed onto each other after assembly of the generator, said two parts including, in the superposed region, at least first and second contact areas or strips electrically connected to each other.

4. Generator according to claim 3, **characterised in that** the part of the support situated at the lower level with respect to the other part carries its at least one coil on an upper surface whereas said other part carries its at least one coil on a lower surface so that all the coils carried by said support are situated in a same general plane after assembly.

5. Generator of the clockwork type including on the one hand a rotor including two flanges (8) carried by a shaft (5) having a diameter D at its centre, magnets (91 and 92), in even numbers, each being fixed to each flange - two consecutive or facing magnets having opposite polarity - this generator including on the other hand a stator formed of at least three coils (11 a, 11 b, 11 c) with axes parallel to that of said rotor, and fixed onto a support (66), these coils being arranged between the two flanges (8) fitted with magnets (9) and arranging between them a sufficient central space (13) for the rotor shaft (5), **characterised in that** the coil support (66) includes two rigid or rigidified parts (51, 52), each carrying at least a coil and a part able to be deformed materially connecting said rigid parts (51, 52), said deformable part being arranged to be elastically deformed upon the assembly of the rotor to allow the lateral passage of said rotor shaft between two coils, the distance between any two adjacent coils being less than diameter D of the rotor shaft.

6. Generator according to claim 5, **characterised in that** said coil support is formed of a flexible film on which conductive strips are deposited and two rigid substrates at least partially superposed onto said flexible film, said substrates being rigidly secured to said film at least after assembly of the generator, said flexible film defining said deformable part and said at least two rigid substrates defining respectively said at least two rigid or rigidified parts.

7. Generator according to claim 6, **characterised in that** said two rigid substrates are secured to the body in which said rotor is mounted, said flexible film being arranged between said body and said two rigid substrates.

8. Generator according to claim 7, **characterised in that** said two rigid substrates include parts (61, 62) superposed onto the coils and arranged on the side opposite to the flexible film with respect to these coils.

9. Generator according to claim 6, **characterised in that** said flexible film is glued onto said rigid substrate, said coils being rigidly secured to said flexible film.

10. Clockwork movement **characterised in that** it is fitted with a generator according to any of claims 1 to 9.

## Patentansprüche

1. Generator für Zeitmessgerät, der einerseits einen Rotor umfasst, der zwei Flansche (8) aufweist, die von einer Welle (5) getragen werden, die in ihrer Mitte einen Durchmesser D besitzt, wobei an jedem Flansch in einer geraden Anzahl Magnete (9) befestigt sind - wobei zwei aufeinander folgende oder einander gegenüber liegende Magnete entgegengesetzte Polarität haben - wobei dieser Generator andererseits einen Stator umfasst, der aus wenigstens drei Wicklungen (11a, 11b, 11c) mit Achsen, die zu jener des Rotors parallel sind, die an einem Träger (6) befestigt sind, gebildet ist, wobei diese Wicklungen zwischen den zwei mit Magneten (9) versehenen Flanschen (8) angeordnet sind und zwischen sich einen mittigen Zwischenraum (13) aufweisen, der für die Welle (5) des Rotors ausreicht, **dadurch gekennzeichnet, dass** der Träger der Wicklungen aus wenigstens zwei Teilen (21, 22) gebildet ist, die dazu ausgelegt sind, unabhängig voneinander mit dem Rotor zusammengefügt zu werden, und jeweils wenigstens eine Wicklung tragen, und dass zwischen diesen wenigstens zwei Teilen (21, 22) elektrische Verbindungsmittel (30) vorgesehen sind, wobei der Abstand, der zwei beliebige benachbarte Wicklungen trennt, kleiner als der Durchmesser D der Welle ist.

2. Generator nach Anspruch 1, **dadurch gekennzeichnet, dass** die elektrischen Verbindungsmittel durch eine Brücke gebildet sind, die die zwei Teile des Wicklungsträgers verbindet, wobei diese Brücke Leiterbahnen aufweist, die auf ihrer Seite, die diesen zwei Teilen gegenüber liegt, angeordnet sind.

3. Generator nach Anspruch 1, **dadurch gekennzeichnet, dass** der Wicklungsträger aus zwei Teilen gebildet ist, die nach der Montage dieses Generators teilweise übereinander liegen, wobei diese zwei Teile im Überlagerungsbereich wenigstens einen ersten bzw. einen zweiten Kontaktbereich oder eine erste bzw. eine zweite Kontaktbahn, die elektrisch miteinander verbunden sind, aufweisen.

4. Generator nach Anspruch 3, **dadurch gekennzeichnet, dass** jener Teil des Trägers, der sich auf einer Höhe relativ unterhalb des anderen Teils des Trägers befindet, seine wenigstens eine Wicklung auf einer oberen Oberfläche trägt, während dieser andere Teil seine wenigstens eine Wicklung auf einer unteren Oberfläche trägt, derart, dass sich alle Wicklungen, die von dem Träger ge tragen werden, nach der Montage des Generators in derselben allgemeinen Ebene befinden.

5. Generator für Zeitmessgerät, der einerseits einen Rotor umfasst, der zwei Flansche (8) aufweist, die von einer Welle (5) getragen werden, die in ihrer Mitte einen Durchmesser D besitzt, wobei an jedem Flansch in einer geraden Anzahl Magnete (9) befestigt sind - wobei zwei aufeinander folgende oder einander gegenüber liegende Magnete entgegengesetzte Polarität haben - wobei dieser Generator andererseits einen Stator umfasst, der aus wenigstens drei Wicklungen (11a, 11b, 11c) mit Achsen, die zu jeder des Rotors parallel sind und an einem Träger (66) befestigt sind, gebildet ist, wobei diese Wicklungen zwischen den zwei Flanschen (8), die mit Magneten (9) versehen sind, angeordnet sind und zwischen sich einen mittigen Zwischenraum (13) aufweisen, der für die Welle (5) des Rotors ausreicht, **dadurch gekennzeichnet, dass** der Träger (66) der Wicklungen wenig stens zwei starre oder versteifte Teile (51, 52), die jeweils wenigstens eine Wicklung tragen, und einen verformbaren Teil (56), der diese zwei starren Teile (51, 52) materiell verbindet, umfasst, wobei dieser verformbare Teil dazu ausgelegt ist, elastisch verformt zu werden, wenn der Rotor und der Stator zusammengefügt werden, um den seitlichen Durchgang der Welle zwischen zwei Wicklungen zu ermöglichen, wobei der Abstand, der zwei beliebige benachbarte Wicklungen trennt, kleiner als der Durchmesser D der Welle ist.

6. Generator nach Anspruch 5, **dadurch gekennzeichnet, dass** der Träger durch eine biegsame Folie gebildet ist, auf die Leiterbahnen aufgebracht sind, und durch wenigstens zwei starre Substrate gebildet ist, die dem biegsamen Film wenigstens teilweise überlagert sind, mit dem sie wenigstens nach der Montage des Generators fest zusammengefügt werden, wobei die Folie den verformbaren Teil definiert und die wenigstens zwei starren Substrate die wenigstens zwei starren oder versteiften Teile definieren.

7. Generator nach Anspruch 6, **dadurch gekennzeichnet, dass** die zwei starren Substrate am Körper, in dem der Rotor montiert ist, befestigt sind, wobei die biegsame Folie zwischen diesem Körper und den zwei starren Substraten angeordnet ist.

8. Generator nach Anspruch 7, **dadurch gekennzeichnet, dass** die zwei starren Substrate Teile (61, 62) aufweisen, die den Wicklungen überlagert sind und sich auf der Seite befinden, die der biegsamen Folie in Bezug auf diese Wicklungen gegenüberliegt.

9. Generator nach Anspruch 6, **dadurch gekennzeichnet, dass** die biegsame Folie auf die starren Substrate geklebt ist, wobei die Wicklungen auf dieser biegsamen Folie starr befestigt sind.

10. Uhrwerk, **dadurch gekennzeichnet, dass** es mit einem Generator nach einem der Ansprüche 1 bis 9 ausgerüstet ist.
